Europäisches Patentamt

European Patent Office

Office européen des brevets

(19)

(11) Numéro de publication: **0 026 141**
**B1**

(12) **FASCICULE DE BREVET EUROPEEN**

(45) Date de publication du fascicule du brevet:
**15.06.83**

(21) Numéro de dépôt: **80401339.9**

(22) Date de dépôt: **19.09.80**

(51) Int. Cl.³: **F 16 B 39/10, G 21 C 3/32**

(54) **Assemblage vissé de sécurité.**

(30) Priorité: **19.09.79 FR 7923312**

(43) Date de publication de la demande:
**01.04.81 Bulletin 81/13**

(45) Mention de la délivrance du brevet:
**15.06.83 Bulletin 83/24**

(84) Etats contractants désignés:
**BE DE GB IT NL SE**

(56) Documents cités:
**DE-A-869 574**
**DE-A-2 739 644**
**FR-A-2 368 785**
**FR-A-2 374 547**
**US-A-2 374 270**

(73) Titulaire: **Framatome, Tour Fiat 1 place de la Coupole, F-92400 Courbevoie (FR)**

(72) Inventeur: **Le Pargneux, Jacques, 41, rue Bonnel, F-69003 Lyon (FR)**

(74) Mandataire: **Dupuy, Louis et al, CREUSOT-LOIRE 15 rue Pasquier, F-75383 Paris Cedex 8 (FR)**

BUNDESDRUCKEREI BERLIN

## Assemblage vissé de sécurité

La présente invention concerne un assemblage vissé de sécurité, empêchant la perte de la tête de vis en cas de rupture, et plus particulièrement destiné à titre d'exemple à la liaison entre les tubes guides et les pièces d'extrémité dans les assemblages combustibles des réacteurs nucléaires.

Dans le coeur d'un réacteur nucléaire les barreaux ou »crayons« de matière combustible sont généralement regroupés parallèlement en faisceaux ou assemblages comportant des pièces d'extrémité et des grilles supports intermédiaires maintenant l'écartement des crayons; des tubes de soutien ou tubes guides relient directement les pièces d'extrémité, en prenant par endroit la place de crayons dans les grilles supports intermédiaires.

L'exploitation du réacteur prévoit la possibilité de remplacer ou de vérifier certains crayons, ce qui oblige à démonter les assemblages, opération qui se fait sous immersion avec une forte épaisseur d'eau de protection contre les radiations.

Le problème consiste donc à permettre que la liaison des pièces d'extrémité avec les tubes guides soit suffisamment aisée à démonter pour pouvoir opérer à distance et sous immersion, et quelle soit en même temps suffisamment sûre pour éviter tout risque de relâchement de la liaison par dévissage intempestif, et surtout risque de voir les pièces de liaison se séparer de l'assemblage et être entraînées dans le circuit du fluide primaire de refroidissement du réacteur.

Une solution a déjà été proposée par FR-A-2 368 785 du même déposant, qui décrit une liaison à vis, donc facilement manoeuvrable à distance, avec un dispositif de blocage en rotation par déformation d'un élément de faible épaisseur de la tête de vis pour l'engager dans un évidement de la pièce d'extrémité, opération qui est également facile à réaliser à distance. Cette disposition permet bien d'empêcher le desserrage accidentel de la vis et sa perte dans le circuit primaire. Elle laisse cependant subsister un risque au cas où surviendrait une rupture accidentelle de la vis, en particulier si cette rupture a lieu dans la zone relativement plus fragile de liaison entre la tête et la tige filetée; dans ce cas en effet, la tête deviendrait entièrement libre, et pourrait donc quitter son logement et devenir un corps étranger incontrôlé dans le coeur du réacteur et dans le circuit primaire. Ceci concerne surtout le cas des vis de liaison des tubes guides avec les pièces d'extrémité inférieure lorsque l'assemblage est en position dans le coeur.

La présente invention constitue un perfectionnement à la solution antérieure et permet de maintenir la tête de vis prisonnière, à la fois en rotation pour éviter le dévissage, et en même temps axialement pour éviter son déplacement en cas de rupture.

L'invention concerne donc un assemblage vissé de sécurité, comportant une vis dont la tête est engagée dans un logement lisse de la première pièce à assembler et dont la tige filetée est engagée dans la partie filetée conjuguée de la deuxième pièce à assembler, assemblage dans lequel la tête de la vis comporte une partie déformable constituée par une virole cylindrique externe de faible épaisseur, et dans lequel le logement de la tête de vis comporte, sur une partie seulement de sa périphérie, au moins un évidement de plus fort diamètre dans lequel pénètre une partie correspondante de la virole déformable lorsque l'on déforme celle-ci par expansion. Selon l'invention le logement de la tête de vis comporte en outre une gorge circulaire formée au niveau de l'arête supérieure de la virole déformable, entre les évidements et débouchant dans ceux-ci, de telle sorte que lors de la déformation par expansion de la virole, une partie au moins de l'arête supérieure pénètre dans la gorge entre les évidements.

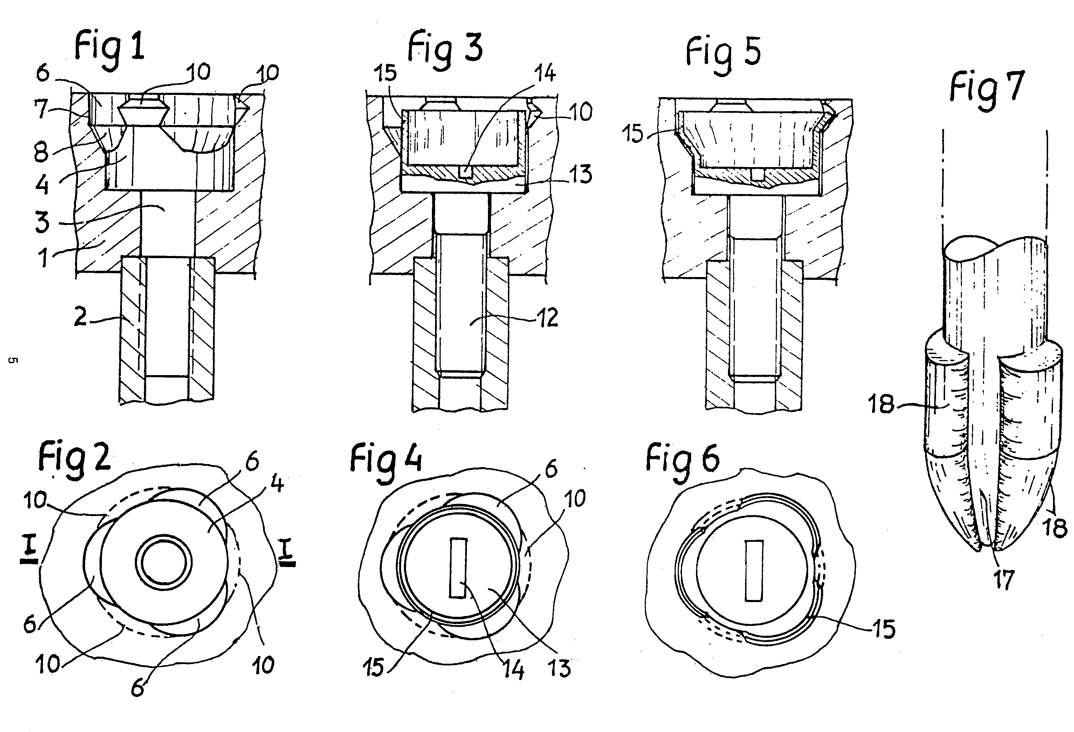

L'invention sera mieux comprise en se référant à un mode de réalisation particulier donné à titre d'exemple et représenté par les dessins annexés. Les figures 1 et 2 représentent, respectivement en coupe diamètrale selon I—I de la figure 2, et en vue de dessus, l'ensemble des deux pièces à assembler, avant mise en place de la vis de liaison.

Les figures 3 et 4, respectivement homologues aux figures 1 et 2, montrent la vis de liaison en place, vissée à fond mais avant blocage.

Les figures 5 et 6 montrent de la même façon l'assemblage après blocage de la vis.

La figure 7 montre un exemple d'outil utilisable pour assurer le blocage de la vis de liaison.

En se référant tout d'abord aux figures 1 et 2 on viot les deux pièces à assembler 1 et 2, la pièce 1 pouvant être par exemple une pièce d'extrémité d'un assemblage de crayons combustibles pour un réacteur et la pièce 2 un tube guide pour raidir et soutenir l'assemblage. L'extrémité du tube guide 2 est ici engagée dans un logement conjugué de la pièce 1, avec de préférence un contour prismatique pour empêcher la rotation du tube dans son logement. Dans l'axe du tube 2 la pièce 1 est percée d'un trou lisse 3, puis d'un logement cylindrique 4 de plus grand diamètre. Le logement 4 comporte, également répartis angulairement autour de l'axe, trois évidements 6 formés chacun par une partie 7 à paroi parallèle à l'axe de l'assemblage, raccordée au logement 4 par une partie conique 8.

Dans la partie supérieure du logement 4, une gorge circulaire 10 à section triangulaire est formée entre les évidements 6 et débouche dans chacun de ceux-ci.

En se référant maintenant aux figures 3 et 4 on voit la vis de liaison 12 vissée à fond dans la partie filetée d'extrémité du tube 2; elle maintient ainsi l'assemblage où l'extrémité du tube 2 vient en butée eu fond de son logement dans la pièce 1, tandis que la face interne de la tête de vis vient en appui sur l'épaulement formé entre le trou lisse 3 et le logement 4.

De façon tout-à-fait analogue à ce qui a été décrit dans FR-A-2 368 785, la tête 13 de la vis 12 comporte une partie massive dans laquelle est formée une fente 14 destinée à recevoir une lame de tournevis, et une partie déformable constituée par une virole 15 de faible épaisseur.

Une fois que la vis est vissée à fond au moyen d'un tournevis, son blocage à la fois en rotation et axialement est obtenu au moyen d'un outil 17 comme celui représenté à la figure 7. Comme le tournevis de serrage, l'outil 17 peut être monté à l'extrémité d'une perche lorsque l'opération se fait à distance, sous immersion. L'outil 17 comporte trois lobes 18 en saillie, angulairement équidistants, et de forme sensiblement conjuguée à celle des évidements 6 du logement de tête de vis.

On amène l'outil 17 dans l'axe de l'assemblage, et en position angulaire telle que les lobes 18 soient en face des épanouissements 6; par une poussée axiale de l'outil les lobes 18 provoquent l'expansion des parties correspondantes de la virole 15, et les déforment jusqu'à venir en butée sur les parties coniques 8 et droites 7 des évidements. Les figures 5 et 6 montrent le résultat d'une telle déformation, qui suffit à empêcher par la suite la rotation de la vis et son desserrage, et on pourra noter que ceci est obtenu au moyen d'un outil extrêmement simple et ne comportant aucune partie mobile.

En face des trois zones restées globalement cylindriques entre les trois évidements, il n'y a pas de protubérance de l'outil 17, et il n'y a donc pas d'expansion directe de la virole 15. Mais la déformation dans la zone des évidements se répercute indirectement, au moins sur la partie supérieure de la virole, si bien que dans ces zones intermédiaires l'arête supérieure de la virole pénètre légèrement dans la gorge 10. Cela suffit pour rendre la tête prisonnière, par trois points d'arrêt, au cas où une rupture de la vis en dehors de la zone filetée désolidariserait la tête du reste de la vis. On obtient ainsi un degré supplémentaire de sécurité dans le fonctionnement du réacteur.

Pour le démontage de l'assemblage, il suffit d'engager à nouveau une lame de tournevis dans la fente 14 et de faire tourner normalement la vis dans le sens du desserrage. Lorsque le couple de rotation est suffisant les parties précédemment expansées sont rabattues vers le centre en passant devant les parties de paroi restées droites du logement 4, et par effet de proximité ce rabattement des parties largement expansées est suffisant pour rabattre aussi les parties qui n'avaient été que très légèrement expansées dans la gorge 10. L'ensemble est ainsi rendu entièrement libre en rotation et axialement pour un dévissage complet et un démontage de l'assemblage combustible.

Bien entendu, l'invention n'est pas strictement limitée au mode de réalisation qui vient d'être décrit à titre d'exemple, mais elle couvre également les modes de réalisation qui n'en différeraient que par des détails, par des variantes d'exécution, ou par l'utilisation de moyens équivalents.

Ainsi l'invention reste inchangée si la vis pleine est remplacée par une douille creuse permettant, dans le cas d'un assemblage combustible, le passage à l'intérieur des tubes guides des crayons absorbants destinés à commander la réactivité du coeur du réacteur. De même l'invention ne sera pas affectée si l'on remplace la fente de tournevis par tout autre dispositif usuel d'entrainement en rotation comme un trou borgne, carré ou hexagonal.

Le nombre d'évidements formés tout autour du logement de tête de vis n'est pas non plus obligatoirement de trois, et il pourra même suffire d'un seul pour obtenir le blocage en rotation, tandis qu'il se formera encore une partie légèrement expansée de la virole à chaque extrémité radiale de l'évidement, créant ainsi deux points de blocage axial.

Enfin l'invention ne se limite pas au cas donné en exemple de la liaison démontable des pièces d'extrémité des tubes guides d'assemblages combustibles de réacteurs nucléaires, mais elle couvre également des réalisations analogues pour tous assemblages vissés devant assurer le même degré de sécurité à l'encontre des risques de perte de tête de vis en cas de rupture.

**Revendication**

Aseemblage vissé de sécurité, comportant une vis (12) dont la tête (13) est engagée dans un logement cylindrique (4) de la première pièce (1) à assembler, et dont la tige filetée est engagée dans une partie filetée conjuguée de la deuxième pièce (2) à assembler, assemblage dans lequel la tête (13) de la vis (12) comporte une partie déformable constituée par une virole cylindrique externe (15) de faible épaisseur, et dans lequel le logement (4) de la tête (13) de vis comporte, sur une partie seulement de sa périphérie, au moins un évidement (6) dans lequel pénètre une partie correspondante de la virole déformable (15) lorsque l'on déforme celle-ci par expansion, caractérisé par le fait que le logement (4) de la tête (13) de vis comporte en outre une gorge circulaire (10) formée au niveau de l'arête supérieure de la virole déformable (15), entre les évidements (6) et débouchant dans ceux-ci, de telle sorte que lors de la déformation par expansion de la virole (15), une partie au moins de arête supérieure pénètre dans la gorge (10) entre les évidements (6).

## Patentanspruch

Sicherheitsschraubverbindung mit einer Schraube (12), deren Kopf (13) in eine zylindrische Aufnahme (4) des ersten zu verbindenden Teils (1) eingeführt wird, und deren Gewindeschaft in einen zugeordneten Gewindeabschnitt des zweiten zu verbindenden Teils (2) eingeschraubt wird, Verbindung bei welcher der Kopf (13) der Scharube (12) einen verformbaren aus einem dünnwandigen zylindrischen Außenring (15) bestehenden Abschnitt aufweist, und bei welcher die Aufnahme (4) des Schraubenkopfes (13) nur an einem Teil seines Umfangs mindestens eine Ausnehmung (6) aufweist, in welche ein entsprechender Teil des verformbaren Ringes (15) eindringt wenn dieser durch Expansion verformt wird, dadurch gekennzeichnet, daß die Aufnahme (4) des Schraubenkopfes (13) außerdem eine kreisförmige Rille (10) aufweist, die in Höhe der Oberkante des verformbaren Ringes (15) zwischen den Ausnehmungen (6) ausgebildet ist und in diese derart mündet, daß mindestens ein Teil der Oberkante in die Rille (10) zwischen den Ausnehmungen eindringt wenn der Ring (15) durch Expansion verformt wird.

## Claim

Screwed safety connection comprising a screw (12) whose head (13) is engaged in a cylindrical socket (4) in the first part (1) which is to be connected and whose threaded stem is engaged in a matching threaded portion of the second part (2) which is to be connected, in which connection the head (13) of the screw (12) is provided with a deformable portion consisting of a thin external cylindrical band (15), while the socket (4) for the screwhead (13) is provided, over only part of its periphery, with at least one recess (6) into which a corresponding part of the deformable band (15) penetrates when the latter is deformed by expansion, characterised by the fact that the socket (4) for the screwhead (13) is also provided with a circular groove (10) formed level with the top edge of the deformable band (15) between the recesses (6) and leading into the latter, in such a manner that when the band (15) is deformed by expansion at least a part of the top edge penetrates into the groove (10) between the recesses (6).

Fig 1

Fig 3

Fig 5

Fig 7

Fig 2

Fig 4

Fig 6

0 026 141